# EUROPEAN PATENT APPLICATION

(11) **EP 2 264 917 A1**
(43) Date of publication of application: **22.12.2010**
(21) Application number: 09719566.3
(22) Date of filing: 13.02.2009
(51) Int. Cl.: H04B 10/12, G02B 6/00, G02B 6/032, H04B 10/04, H04B 10/06, H04B 10/13, H04B 10/135, H04B 10/14, H04B 10/142, H04B 10/152

(54) **OPTICAL COMMUNICATION SYSTEM**

(30) Priority: 10.03.2008 JP 2008059615; 20.10.2008 JP 2008270051
(71) Applicant: Sumitomo Electric Industries, Ltd., Chuo-ku Osaka-shi Osaka 541-0041 (JP)
(72) Inventor: SASAOKA, Eisuke, Yokohama-shi Kanagawa 244-8588 (JP)
(74) Representative: HOFFMANN EITLE
(86) International application number: PCT/JP2009/052390
(87) International publication number: WO 2009/113355

(57) **Abstract**

The present invention relates to an optical communications system equipped with a structure, capable of applying a PBGF as an optical transmission line, by which high capacity information transmission is enabled by use of the PBGF. The optical communications system (1) is provided with an optical transmitter (10), an optical receiver (20) and an optical transmission line (30). The optical transmitter (10) outputs signal light, whose phase or optical frequency is modulated, into the optical transmission line (30). The optical transmission line (30) transmits the signal light outputted from the optical transmitter (10) to the optical receiver (20). The optical receiver (20) receives the signal light transmitted from the optical transmitter (10) via the optical transmission line (30). The optical transmission line (30) includes a photonic band gap fiber having a hollow core.

## Description

### Technical Field

The present invention relates to an optical communications system.

### Background Art

In conventional optical communications systems, a single mode optical fiber having a single core is generally applied as an optical transmission line that is laid between an optical transmitter for outputting signal light and an optical receiver for receiving the signal light.

In an optical communications system to which such a single mode optical fiber is applied to an optical transmission line, wavelength division multiplexing (hereinafter referred to as "WDM") transmission that can transmit and receive a plurality of channels of signal light whose wavelengths are different from each other is adopted as a communications system for efficiently increasing the transmission capacity.
[Patent Document 1] Japanese Patent Application Laid-Open No. 2005-110256
[Patent Document 2] Japanese Patent Application Laid-Open No. 2007-288591
[Patent Document 3] Japanese Patent Application Laid-Open No. 2007-129755
[Non-Patent Document 1] Tadashi Murao, et. al., "Design of extremely low loss hollow type core photonic band gap fiber having effective single mode," General Conference of the Institute of Electronics, Information and Communication Engineers, 2007, C-3-51
[Non-Patent Document 2] Kazunori Mukasa, et. al., "Study for DWDM transmission photonic band gap fiber (PBGF)," General Conference of the Institute of Electronics, Information and Communication Engineers, 2007, C-3-52
[Non-Patent Document 3] Optics Express, Vol. 16, No. 2, pp. 753-791, 21 January, 2008

### Disclosure of the Invention

### Problems that the Invention is to Solve

The inventors have studied the conventional optical communications systems, and as a result, have found problems as follows.

Since it is difficult to reduce the loss to a large extent in an optical transmission line of a single mode optical fiber, it is necessary to increase the optical power inputted into the optical transmission line in order to achieve a long distance for the transmission distance. However, an increase in the input optical power causes a nonlinear optical phenomenon to occur in an optical transmission line to which a single mode optical fiber is applied. Therefore, under present circumstances, research has been actively carried out in regard to lowering in loss of an optical transmission line and lowering in nonlinearity. Patent Document 1 proposes mitigating nonlinearity by means of preemphasis etc. However, not only does the addition of such means make the configuration of the optical communications system more complicated but also it cannot be said that an effect by mitigating nonlinearity is perfect.

In addition, focusing attention on only the standpoint of a low loss and low nonlinearity optical transmission medium, a photonic band gap fiber (hereinafter referred to as "PBGF") having a hollow core could be a candidate for an optical transmission line. However, it was difficult to apply the PBGF as an optical transmission line for WDM transmission.

Also, the PBGF can guide waves of light by confining light in a hollow core by utilizing a photonic band gap of photonic crystals of a two-dimensional periodic structure that composes cladding. Such PBGFs have been studied and developed for the purpose of achieving an optical transmission line having lower nonlinear optical characteristics and featuring lower loss transmission by making remarkably small the optical power ratio of silica glass portions other than the hollow core (that is, 1% or less in the entire optical power) (see Non-Patent Documents 1 and 2). For example, Non-Patent Document 1 proposes a PBGF whose theoretical transmission loss is 10⁻³dB/km or less. Also, Non-Patent Document 2 proposes a PBGF whose theoretical transmission loss is 10⁻²dB/km or less.

Moreover, there is a tendency by which the width of a wavelength band having lower loss of the PBGF becomes narrower than that of a single mode optical fiber while there is a possibility for the minimum loss value of the PBGF to become smaller than that of a single mode optical fiber. For example, when being compared at a wavelength band whose loss is 1dB/km or less, the wavelength band width becomes 0.2µm or so in the PBGF described in Non-Patent Documents 1 and 2 while the wavelength band width of a single mode optical fiber is in the range of 1.0 through 1.7µm or so. Therefore, where the PBGF is applied as an optical transmission line, it was difficult to carry out WDM transmission in a wide wavelength range in the prior art optical transmission system.

The present invention is made to solve the aforementioned problem, and it is an object to provide an optical communications system comprising a structure, capable of applying a PBGF as an optical transmission line, by which high capacity information transmission is enabled by use of the PBGF.

### Means for Solving the Problems

An optical communications system according to the present invention comprises, at least, an optical transmitter and an optical transmission line. The optical transmitter outputs signal light whose phase or optical frequency is modulated. The optical transmission line includes a photonic band gap fiber having a hollow core and transmits the signal light outputted from the optical transmitter.

In the optical communications system according to the present invention, it is preferable that the optical transmitter outputs the signal light by executing a phase modulation for each sub-carrier of signal light and a multi-carrier modulation by OFDM. In addition, the phase of signal light or modulation of optical frequency corresponds to the phase modulation to each sub-carrier, and the multiplexing of these modulated individual sub-carriers corresponds to the modulation of multi-carriers. The OFDM is a method that causes the respective sub-carriers not to be influenced by each other while securing orthogonality of the respective sub-carriers on the frequency axis. In this case, it becomes possible to further increase the transmission capacity of an optical communications system by the multi-carrier modulation. Further, by using a photonic band gap fiber having a hollow core, it is possible to prevent the peak-to-average value power ratio from being increased and to prevent the transmission performance from deteriorating due to nonlinearity of optical fibers, which can become problems in the OFDM.

In the optical communications system according to the present invention, it is preferable that the optical transmitter also modulates the amplitude of signal light and outputs the signal light. It is preferable that the optical transmitter modulates the signal light by multiple values exceeding binary values. It is preferable that the optical transmitter multiplexes signal light of two or more wavelengths, which are included in a low loss wavelength band of the photonic band gap fiber. Also, it is preferable that the confinement ratio of signal light power in the hollow core of the photonic band gap fiber is 99% or more.

Furthermore, in the conventional optical communications system to which a single mode optical fiber is applied to an optical transmission line, it is difficult to turn respective signal channels into multiple values by amplitude modulation, phase modulation and frequency modulation. That is, since it is difficult to reduce the loss to a large extent in an optical transmission line of a single mode optical fiber, it will become impossible to secure a sufficient SN ratio when multiple values are fostered by the amplitude modulation. In addition, since it is difficult to reduce nonlinearity to a large extent in the optical transmission line of a single mode optical fiber, it will become impossible to secure a sufficient SN ratio by adverse influences of selfphase modulation (SPM) and frequency chirp, which result from nonlinearity, when multiple values are fostered by the phase modulation and the frequency modulation.

### Effects of the Invention

In accordance with the optical communications system according to the present invention, it becomes possible to use the PBGF as an optical transmission line by executing a phase modulation or a frequency modulation of signal light in the optical transmitter, and high capacity information transmission, which was pointed out as the problem described above, is enabled by use of the PBGF.

### Brief Description of the Drawings

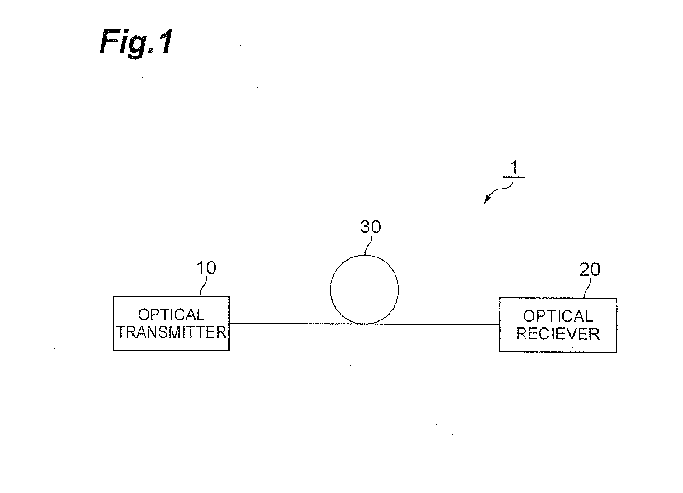

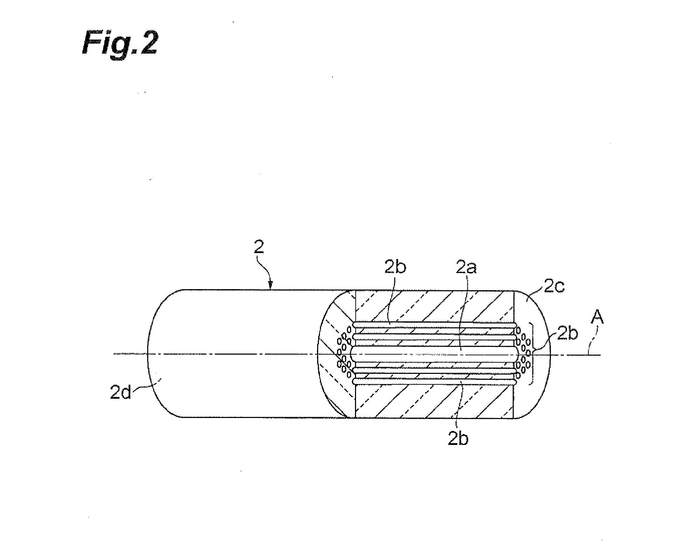

Fig. 1 is a view showing a configuration of an embodiment of an optical communications system according to the present invention; and Fig. 2 is a cutaway perspective view showing a structure of a photonic band gap fiber (PBGF) used as an optical transmission line included in the optical communications system according to the present embodiment.

### Description of the Reference Numerals

1... optical communications system; 10... optical transmitter; 20...optical receiver; and 30...optical transmission line.

### Best Modes for Carrying Out the Invention

In the following, embodiments of an optical communications system according to the present invention will be explained in detail with reference to the accompanying drawings. In the explanation of the drawings, constituents identical to each other will be referred to with numerals identical to each other without repeating their overlapping descriptions.

Fig. 1 is a view showing a configuration of an embodiment of an optical communications system according to the present invention. An optical communications system 1 shown in Fig. 1 comprises an optical transmitter 10, an optical receiver 20, and an optical transmission line 30 provided between the optical transmitter 10 and the optical receiver 20.

The optical transmitter 10 outputs signal light whose phase or optical frequency is modulated into the optical transmission line 30. The optical transmitter 10 may also modulate the amplitude of signal light and then output the signal light into the optical transmission line 30. Further, it is preferable that the optical transmitter 10 modulates the signal light by multiple values exceeding binary values. The optical transmission line 3 0 transmits the signal light outputted from the optical transmitter 10 to the optical receiver 20. The optical receiver 20 receives the signal light, which is transmitted from the optical transmitter 10, via the optical transmission line 30.

The optical transmission line 30 is constituted so as to include a photonic band gap fiber having a hollow core. Fig. 2 is a cutaway perspective view showing a structure of a photonic band gap fiber (PBGF) 2 as the optical transmission line 30 included in the optical communications system 1 shown in Fig. 1.

As shown in Fig. 2, the photonic band gap fiber 2 is comprised of a silica glass, and has an end surface 2c at one end thereof and an end surface 2d at the other end thereof, respectively. Also, the photonic band gap fiber 2 includes holes 2a and 2b. The hole 2a is formed as one at the center portion in the section crossing the longitudinal direction (that is, the optical axis direction A) of the photonic band gap fiber 2. Also, the hole 2a extends in the optical axis direction in the interior of the photonic band gap fiber 2, and passes through from the end surface 2c to the end surface 2d. On the other hand, the holes 2b are formed as a plurality at the periphery of the hole 2a. Also, the holes 2b respectively extend in the optical axis direction in the interior of the photonic band gap fiber 2 and pass through from the end surface 2c to the end surface 2d.

The holes 2b are formed in an array and at an interval that they bring about a photonic crystal structure on the section crossing the longitudinal direction (that is, the optical axis direction A) of the photonic band gap fiber 2, whereby a photonic band gap being a forbidden band of light is brought about at the periphery of the hole 2a, and laser light L can be confined in the interior of the hole 2a and in the vicinity thereof. As a result, the laser light L incident into the photonic band gap fiber 2 will propagate mainly in the interior of the hole 2a. The hole 2a becomes the hollow core.

It is preferable that the optical transmitter 10 multiplexes signal light of two or more wavelengths, which are included in a low loss wavelength band of the photonic band gap fiber 2, and such multiplexed signal light is outputted into the optical transmission line 30. Further, it is preferable that the confinement ratio of signal light power in the hollow core of the photonic band gap fiber 2 is 99% or more.

In the PBGF utilizing silica glass, when the confinement ratio of signal light power in the hollow core (hole 2a) portion is made into 99% or more (that is, the ratio by which signal light power leaks into the silica glass portion is made into 1% or less), and the hollow core portion is kept in a close to vacuum state by sealing means with the internal pressure thereof reduced, it becomes possible to reduce nonlinearity to 1/100 or less. Under such conditions, it also becomes possible to reduce the loss to 1/100 or less the inherent loss of the material. In regard to the loss, there also are factors such as a confinement loss resulting from the photonic band gap structure design and a scattering loss at the boundary between the hollow core portion and the silica glass portion. However, by reducing these factors, the loss can be reduced to 1/10 or less the loss of prior art optical fibers.

In the optical communications system 1 according to the present embodiment, a case is taken into consideration where 16-valued amplitude modulation and 16-valued phase modulation are combined as multiple-valued modulation of signal light. Both the loss and nonlinearity of the PBGF used as the optical transmission line 30 are reduced to 1/10 or less that of the single mode optical fiber. Therefore, even when the maximum amplitude and the maximum phase fluctuation amount remain equivalent to those of the prior art optical communications system, it is possible to secure the SN ratio necessary for transmission. That is, the optical communications system according to the present embodiment can achieve a bit rate (log₂ (16x16)) which is greater by 8 times at the same symbol rate than in general optical communications systems that execute binary modulation for amplitude and intensity.

In the case of 40G symbol/second as an example, the above-described example can achieve a transmission capacity of 320Gbps. Furthermore, in the PBGF, although there is a tendency that the low loss wavelength band is narrow in comparison with the single mode optical fibers, there is a strong possibility of securing a transmission wavelength band of tens of nanometers (nm). Therefore, there also is a possibility of achieving WDM transmission. As an example, when WDM transmission is carried out at 40G symbol/second, 16-valued amplitude modulation, 16-valued phase modulation, spectral spacing of 0.4nm, and a wavelength bandwidth of 80nm (that is, 200 waves), the transmission capacity per PBGF becomes 64 Tbps as the entire system.

Next, the following two types of PBGF-1 and PBGF-2 are taken into consideration as the PBGF, and are compared with a conventional standard single mode optical fiber (hereinafter referred to as "SMF") with respect to the transmission capacity per wavelength. As for the PBGF-1, the confinement ratio of optical power in the hollow core portion is 90% or more, the loss is 0.2dB/km at a wavelength of 1.55µm, and the nonlinearity coefficient is 2x10^{-11/}W. As for the PBGF-2, the confinement ratio of optical power in the hollow core portion is 99% or more, the loss is 0.012dB/km at a wavelength of 1.55µm, and the nonlinearity coefficient is 2x10⁻¹²/W. Also, as for SMF, the loss is 0.2dB/km at a wavelength of 1.55µm, and the nonlinearity coefficient is 3x10⁻¹⁰/W. The nonlinearity coefficient is expressed by the ratio of the nonlinear refractive index n₂ to the effective area A_{eff} (n₂/A_{eff}).

Where the SMF is used as an optical transmission line, the transmission capacity of 40Gbps per wavelength can be sufficiently achieved by amplitude modulation or phase modulation. On the other hand, when the PBGF-1 is compared with the SMF, they are equivalent to each other with respect to the loss. Nonlinearity of the PBGF-1 is reduced to 1/15. Therefore, in the case that an input power to the PBGF-1 is equivalent to that to the SMF, the phase noise resulting from nonlinearity of the fiber can be reduced to 1/15. Accordingly, even when the phase is modulated to 16-value as multiple values, the transmission quality equivalent to the SMF may be maintained at the symbol rate (→ 40G symbol/second) equivalent to a case where the SMF is used. Therefore, an optical communications system of 160Gbps per signal light can be achieved by executing 16-valued phase modulation using the PBGF-1.

Also, in the case that the phase noise equivalent to that in the case of using the SMF is permitted, the optical power which is greater by 15 times than in the SMF may be inputted into the PBGF-1, and the optical SN ratio is improved by 15 times with respect to the amplitude modulation. This means that, even when the amplitude is modulated to 16-value as multiple values, the transmission quality equivalent to that of the SMF may be maintained at the symbol rate (that is, 40G symbol/second) equivalent to that in the case of using the SMF. Therefore, an optical communications system of 160Gbps per signal light can be achieved by executing 16-valued amplitude modulation using the PBGF-1.

The PBGF-2 has a loss reduced to approximately 1/16 that of SMF in addition to nonlinearity. Therefore, where an input power thereto equivalent to that to the SMF, it is possible to reduce the phase noise resulting from nonlinearity of a fiber to approximately 1/16, and the optical SN ratio in the amplitude modulation can be improved approximately 16 times. Also, increasing the input optical power by 16 times is equivalent to reducing the loss to 1/16 with the input optical power remaining equivalent. As a result, at a symbol rate equivalent to a case of using SMF, the phase is modulated to 16-value and the amplitude is modulated to 16-value with equivalent transmission quality maintained. By combining both, an optical communications system of 320Gbps per wavelength can be achieved.

QAM described in Non-Patent Document 3 and Patent Document 2 may be listed as one example of a system for modulating optical phase and amplitude. In Fig. 8 of Document 1, the distance from the origin corresponds to optical amplitude, and the angle from the horizontal axis (I axis) corresponds to the optical phase. In the case of 8-QAM shown in Fig. 8, the amplitude is binary, and the phase is 4-valued (90-degree step) with respect to the respective amplitudes, wherein 8-valued (3-bit) modulation is executed as the entirety. In addition, Fig. 3 of Patent Document 2 discloses an example of 16-valued (4-bit) modulation.

Fig. 9 of Non-Patent Document 3 shows the relationship between spectral efficiency (spectral efficiency) and a required SN ratio per bit (SNR per bit) with respect to a plurality of modulation systems including QAM. In any of the modulation systems, the greater the multiplexing degree becomes (corresponding to the constellation size M in Table 6 of Non-Patent Document 3), the more the spectral efficiency is increased. However, in line therewith, the desired SNR per bit is also increased. When being compared with other modulation systems, it can be said that the QAM is a modulation system having favorable efficiency in the point that the desired SNR per bit to achieve the same spectral efficiency is the smallest. On the other hand, in the QAM, where the constellation size M exceeds 4, the desired SNR per bit is unavoidably increased.

On the contrary, since the optical communications system according to the present embodiment can further increase the incidence optical power or further decrease attenuation of the incidence optical power by using a photonic band gap fiber having a low nonlinearity and low loss hollow core as an optical transmission line, the SN ratio can be improved.

In addition, as described on pages 785 through 789 of Non-Patent Document 3, it also becomes possible to attempt to increase the transmission capacity of optical communications by further executing multiplexing by means of OFDM with the optical phase and amplitude modulated. On the other hand, as described in the final part of page 798 of Non-Patent Document 3, there is a possibility that the peak-to-average value power ratio (PAR) being a ratio of the peak power to the average value power is increased in the OFDM. Therefore, there is a fear of deterioration of the transmission performance due to nonlinearity of optical fibers. Patent Document 3 discloses an example of devices to lower the peak-to-average value power ratio. However, in order to achieve the device according to Patent Document 3, it is requisite to achieve the processing described in the corresponding Patent Document 3 and to prepare an apparatus to achieve the processing.

On the contrary, in the optical communications system according to the present embodiment, multiplexing based on OFDM can be achieved without resulting in deterioration of the transmission performance due to nonlinearity of optical fibers without carrying out the processing described in Patent Document 3 by using a photonic band gap fiber having a low nonlinearity and low loss hollow core as an optical transmission line.

## Claims

1. An optical communications system, comprising:
an optical transmitter outputting signal light whose phase or optical frequency is modulated; and
an optical transmission line, which transmits the signal light outputted from the optical transmitter, including a photonic band gap fiber having a hollow core.

2. An optical communications system according to claim 1, wherein the optical transmitter outputs the signal light by executing a phase modulation to each sub-carrier of the signal light and a multi-carrier modulation by OFDM.

3. An optical communications system according to claim 1 or 2, wherein the optical transmitter further modulates an amplitude of the signal light.

4. An optical communications system according to any one of claims 1 to 3, wherein the optical transmitter modulates the signal light by multiple values exceeding binary values.

5. An optical communications system according to claim 1, wherein the optical transmitter multiplexes signal light with two or more wavelengths, the two or more wavelengths being included in a low loss wavelength band of the photonic band gap fiber.

6. An optical communications system according to claim 1, wherein a confinement ratio of signal light power in the hollow core of the photonic band gap fiber is 99% or more.
